# EUROPÄISCHE PATENTSCHRIFT

(11) **EP 1 568 921 B1**
(45) Veröffentlichungstag und Bekanntmachung des Hinweises auf die Patenterteilung: **31.12.2008**
(21) Anmeldenummer: 05003171.5
(22) Anmeldetag: 15.02.2005
(51) Int. Cl.: F16H 59/10, B60W 10/10, B60W 10/18, F16H 59/54, F16H 61/18, F16H 61/16

(54) **Verfahren zum Ansteuern eines automatischen Schaltgetriebes für Fahrzeuge und automatisches Schaltgetriebe für Fahrzeuge**
Method of operating an automatic transmission and automatic transmission for vehicles
Méthode d'opération d'une transmission automatique et transmission automatique pour véhicules

(30) Priorität: 20.02.2004 DE 102004008508
(43) Veröffentlichungstag der Anmeldung: 31.08.2005
(73) Patentinhaber: AUDI AG, 85045 Ingolstadt (DE)
(72) Erfinder: Kischkat, Ralf, Dr., 85057 Ingolstadt (DE)
(74) Vertreter: Thielmann, Frank

(56) Entgegenhaltungen:
- EP-A- 1 229 272
- DE-A1- 4 118 519
- DE-A1- 10 128 572
- DE-A1- 19 743 674
- FR-A- 2 796 116
- US-A- 5 021 764
- US-A- 5 827 149
- US-A- 6 007 451
- US-B1- 6 173 622
- US-B1- 6 253 138

## Beschreibung

Die vorliegende Erfindung betrifft ein Verfahren zum Ansteuern eines automatischen Schaltgetriebes für Fahrzeuge sowie ein entsprechendes automatisches Schaltgetriebe für Fahrzeuge.

Bei Fahrzeugen mit automatischen Getrieben wird über einen Getriebewählhebel vom Fahrer eine Vorgabe hinsichtlich des Betriebszustandes des Getriebes vorgegeben. Der Getriebewählhebel ist mechanisch mit dem Getriebe verbunden, wobei mehrere Schaltstellungen möglich sind, wobei bei einem Teil der Schaltstellungen des Getriebewählhebels eine kraftschlüssige Verbindung im Getriebe besteht (Vorwärts- oder Rückwärtsfahrt) und in anderen Schaltstellungen der Kraftschluss im Getriebe unterbrochen ist (Parkstellung, Leerlauf). Es stellt sich nun weiterhin die Aufgabe, ein unbeabsichtigtes Bewegen des Fahrzeugs aus dem Stillstand heraus zu verhindern, das aus einer ungewollten Betätigung des Getriebewählhebels resultieren kann.

Hierzu ist es bekannt, durch eine mechanische Sperre ein Verbringen des Getriebewählhebels aus einer kraftschlussfreien Schaltstellung in eine kraftschlüssige Schaltstellung zu verhindern, soweit nicht das Bremspedal des Fahrzeuges betätigt ist.

Eine solche mechanische bzw. elektromechanische Sperreinrichtung für die Betätigung des Getriebewählhebels ist beispielsweise aus der DE 102 28 572 A1 bekannt.

Ferner ist eine solche Sperreinrichtung für die Betätigung des Getriebewählhebels aus der DE 41 18 519 A1, die die Oberbegriffe der unabhängigen Ansprüche 1 und 8 offenbart, bekannt. Diese Druckschrift offenbart eine Rückschaltsperre für ein Automatik-Getriebe für Kraftfahrzeuge mit einem in einem Wählhebelgehäuse schwenkbar gelagerten Wählhebel, an dem sich ein Klinkenriegel befindet und eine Klinke mit mehreren Klinkenrasten, wobei die Bewegung des Wählhebels aus der Park-Schaltposition heraus gesperrt ist, während im gegenläufigen Bewegungssinn der Wählhebel in seiner Bewegung von der Klinke freigegeben ist, und mittels eines durch eine elektronische Steuereinheit betätigten Hubmagneten die Klinke mit ihren Klinkenrasten gegen die Kraft einer Feder außer Eingriff mit dem Klinkenriegel bringbar ist, wenn der Wählhebel in Park-Schaltposition steht, die Zündung eingeschaltet ist und die Bremse betätigt wird. Die Betätigung der Bremse wird mittels eines Bremspedalsensors festgestellt.

Ein Nachteil derartiger Sperreinrichtungen ist vor allem darin zu sehen, dass sie zum einen baulich aufwändig sind und ein großes Gewicht aufweisen und zum anderen eine sehr stabile Bauweise benötigt wird, um sowohl die mechanischen Anforderungen zu bewältigen als auch Dauerfunktionalität und Betriebssicherheit sicherzustellen. Darüber hinaus ist ein großer Nachteil der elektromagnetischen Betätigung die zu erbringende hohe Haltekraft. Diese setzt voraus, dass die Spule des Elektromagneten eine hinreichende Kraft erzeugt, was eine große Anzahl an Spulenwicklungen und insbesondere eine hohe Induktivität der Spule zur Folge hat. Diese belastet das Bordnetz elektromechanisch insbesondere beim Ein- und Ausschalten aufgrund großer Induktionsströme. Dies wirkt der Bordnetzstabilität und einer gleichmäßigen Spannungsversorgung des Bordnetzes entgegen. Darüber hinaus stellt eine hohe Induktivität eine Strahlungsquelle für elektromagnetische Strahlung im Fahrzeuginneren dar, welche aus Gründen der elektromagnetischen Verträglichkeit der Systeme unerwünscht ist. Sie ist auch eine Quelle hoher Spannungsspitzen, gegen die ansteuernde bzw. angeschlossene Steuergeräte mit besonderen Schutzschaltungen geschützt werden müssen. Dies führt zur Verteuerung und erhöhter Störanfälligkeit.

Daneben sind auch Getriebe bekannt, bei denen eine an einem Getriebewählschalter vom Fahrer eingestellte Getriebeposition elektrisch übertragen wird. Ein solches Getriebe ist beispielsweise aus der EP 1 229 272 A2 bekannt. Bei dem aus dieser Druckschrift bekannten Getriebe wird mittels eines Drehschalters oder eines Getriebewählhebels die vom Fahrer gewünschte Getriebeposition eingestellt. Eine Steuervorrichtung erfasst die vom Fahrer eingestellte Getriebeposition und ist außerdem mit einer Anzeige zur Anzeige der Getriebeposition, Sensoren zum Erfassen vorbestimmter Fahrzeugbedingungen, wie dem Betätigen eines Bremspedals, und einer Stellvorrichtung zum Einstellen des gewünschten Schaltzustands im Getriebe verbunden. Stellt die Steuervorrichtung fest, dass bestimmte Bedingungen für eine vom Fahrer eingestellte Getriebeposition, wie beispielsweise das Betätigen des Bremspedals, nicht erfüllt sind, wird der Schaltzustand im Getriebe nicht verändert und die Anzeige wird auf den tatsächlichen Schaltzustand zurückgesetzt. Der Getriebewählschalter bleibt in der vom Fahrer eingestellten Position, und seine neue Stellung wird von der Steuervorrichtung mit dem tatsächlichen Schaltzustand assoziiert.

Demgegenüber ist es Aufgabe der vorliegenden Erfindung eine Sperreinrichtung zu schaffen, die ein zuverlässiges Sperren unerwünschter Betätigungen eines mechanisch mit dem Getriebe verbundenen Getriebewählhebels erzielt und dabei geringe konstruktive und bauliche Anforderungen an das System stellt.

Diese Aufgabe wird durch ein erfindungsgemäßes Verfahren gelöst.

Zum Ansteuern des automatischen Schaltgetriebes ist ein Getriebewählhebel vorgesehen, welcher fahrerbetätigbar zwischen Schaltstellungen verbringbar ist und mechanisch mit dem Getriebe verbunden ist. Bei den Schaltstellungen existieren sowohl kraftschlüssige Schaltstellungen als auch kraftschlussfreie Schaltstellungen, wobei in den kraftschlüssigen Schaltstellungen ein Kraftfluss über Wandler/Kupplung und Getriebe hin zur Antriebswelle hergestellt ist, während in den kraftschlussfreien Schaltstellungen diese Verbindung unterbrochen ist. Darüber hinaus ist eine Getriebesteuereinrichtung vorgesehen, in der über einen Betätigungssensor die Betätigung des Bremspedals erfasst und ein elektrisches Getriebesteuersignal erzeugt wird, welches mittels eines Stellers das Herstellen oder Unterbrechen des Kraftschlusses im Getriebe steuert. Gemäß der Erfindung werden, wenn nicht in einem zeitlichen Zusammenhang zum Verbringen des Getriebewählhebels aus einer kraftschlussfreien Stellung in eine kraftschlüssige Stellung eine Betätigung des Bremspedals festgestellt wird, in der Getriebesteuereinrichtung Getriebesteuersignale erzeugt, welche den Steller so ansteuern, dass das Herstellen eines Kraftschlusses im Getriebe verhindert wird, wobei der Steller unmittelbar am Getriebe angeordnet ist und direkt auf das Getriebe einwirkt.

Durch diese Maßnahme wird über einen Eingriff am Getriebe selber das Herstellen der kraftschlüssigen Verbindung eventuell unterbunden. Die Betätigbarkeit des Getriebewählhebels an sich kann erhalten bleiben, die Funktionalität der mechanischen Verbindung zwischen Getriebe und Getriebewählhebel wird jedoch durch die Wirkung des Stellers übersteuert. Diese Maßnahme erfordert wesentlich geringere mechanische Stabilitäten und vermeidet auch die Benutzung eines Elektromagneten und einer mechanischen Sperreinrichtung im Bereich des Getriebewählhebels. Darüber hinaus wird auch die Sicherheit und Zuverlässigkeit der Funktionalität durch Verringerung der Anzahl mechanischer Komponenten verbessert. Auch eine Erhöhung der Dynamik der Sperrfunktion sowohl für das Aufbauen der Sperrwirkung als auch für das Lösen der Sperre wird ermöglicht. Die Funktion kann sofort nach dem Einschalten der Zündung, also noch vor dem Anlassen des Fahrzeugs aktiv sein. Hierbei entsteht ein Zeitvorteil dadurch, dass die Zeit für den Wechsel der Fahrerwunscherfassung zusätzlich als Reaktionszeit für die Getriebesteuerung zur Verfügung steht.

Gemäß vorteilhafter Ausgestaltung der Erfindung wird dann, wenn das Herstellen eines Kraftschlusses im Getriebe durch Ansteuern des Stellers verhindert wird, eine für den Fahrer wahrnehmbare Rückmeldung erzeugt. Durch das Ansteuern des Stellers wird das Herstellen eines Kraftschlusses trotz Verbringen des mechanischen Getriebewählhebels in eine Schaltstellung, in der ein Kraftschluss erzeugt wird, unterbunden. Diese Maßnahme ist für den Fahrer an sich nicht nachvollziehbar, erst dadurch, dass dem Fahrer eine Rückmeldung erzeugt wird, wird für den Fahrer wahrnehmbar, dass aufgrund einer Fehlbedienung des Fahrzeugs das Herstellen eines Kraftschlusses im Getriebe verhindert wird. Vorteilhafte Ausgestaltungen der Erfindung sehen vor, dass einen solche Rückmeldung in wenigstens einer der Formen der haptischen, akustischen und/oder optischen Rückmeldungen erfolgt. Die haptische Rückmeldung kann beispielsweise in einem Vibrationsalarm am Getriebewählhebel oder in einem erhöhten Betätigungswiderstand des Getriebewählhebels für das Herbeiführen einer kraftschlüssigen Stellung bestehen. Eine andere Form der haptischen Rückmeldung ist, dass über entsprechende Wirkelemente das Verbleiben des Getriebewählhebels in der kraftschlüssigen Stellung verhindert wird und der Getriebewählhebel automatisch in eine kraftschlussfreie Stellung zurückspringt. Beispiele für akustische Rückmeldungen sind entsprechende Ansagen im Fahrzeug oder aber Signaltöne. Eine optische Rückmeldung kann insbesondere durch das Anzeigen eines entsprechenden Fehlersignals bzw. einer Fehlermeldung am Kombiinstrument des Fahrzeugs sein. Derartige Kombiinstrumente für Fahrzeuge sind in der Regel geeignet, über Symbole, Textanzeigen oder beides Hinweise an den Fahrer zu geben.

Es entspricht vorteilhafter Ausgestaltung der Erfindung, wenn die Betätigung des Bremspedals spätestens innerhalb eines vorgegebenen Zeitintervalls nach dem Verbringen des Getriebewählhebels aus einer kraftschlussfreien Stellung in eine kraftschlüssige Stellung erfolgen muss, damit ein Ansteuern des Stellers durch die Getriebesteuereinrichtung im Sinne des Verhinderns des Herstellens eines Kraftschlusses im Getriebe unterbleibt. Selbstverständlich wird dabei das Herstellen eines Kraftschlusses im Getriebe vom Zeitpunkt des Erreichens der kraftschlüssigen Stellung des Getriebewählhebels bis zum Eintreten des Kriteriums hinsichtlich der Betätigung des Bremspedals unterbunden. Im Endeffekt geschieht dies insbesondere dadurch, dass das Herstellen einer kraftschlüssigen Verbindung erst dann erfolgt, wenn in dem Getriebesteuergerät ein entsprechendes Signal erzeugt wird, das das Herstellen einer kraftschlüssigen Verbindung im Getriebe erlaubt, wenn der Getriebewählhebel aus einer kraftschlussfreien in eine kraftschlüssige Stellung verbracht wird. Dies kann insbesondere dadurch realisiert werden, dass die Getriebesteuereinrichtung immer dann, wenn der Getriebewählhebel in eine kraftschlussfreie Stellung verbracht wird, ein Signal an den Steller aussendet, das das Unterbrechen des Kraftschlusses im Getriebe veranlasst und dies erst dann widerrufen wird, wenn in der Getriebesteuereinrichtung ein anderes Signal erzeugt wird, das dem Wiederherstellen des Kraftschlusses durch den Steller entspricht.

Es entspricht einer besonders bevorzugten Ausgestaltung der Erfindung, wenn während und insbesondere zu Beginn des Betätigens des Getriebewählhebels im Sinne des Erzeugens einer kraftschlüssigen Stellung, ausgehend von einer kraftschlussfreien Stellung, das Betätigen des Bremspedals vorliegen muss, damit ein Herstellen einer kraftschlüssigen Verbindung im Getriebe erfolgt. Dies ist die strengste Form des zeitlichen Zusammenhangs zwischen der Betätigung des Getriebewählhebels und des Bremspedals. Es ist insbesondere möglich, den Ablauf so zu gestalten, dass mit Erreichen einer kraftschlussfreien Stellung des Getriebewählhebels ein Signal zum Sperren eines Kraftschlusses im Getriebe durch die Getriebesteuereinrichtung erzeugt wird, welches erst dann aufgehoben wird, wenn das Bremspedal vor einer Betätigung des Getriebewählhebels im Sinne des Herbeiführens einer kraftschlüssigen Stellung erfolg. Welche dieser Alternativen die günstigere ist, kann im Einzelfall entschieden werden und auch von anderen Umgebungsbedingungen abhängig sein.

Es entspricht einer weiterführenden Ausgestaltung der Erfindung, dass in dem Fall, in dem das Verbringen des Getriebewählhebels aus einer kraftschlussfreien Stellung in eine kraftschlüssige Stellung, welches kein Herstellen einer kraftschlüssigen Verbindung im Getriebe zur Folge hatte, ein Zurückführen des Getriebewählhebels in eine kraftschlussfreie Stellung erforderlich ist, bevor ein Ansteuern des Stellers durch die Getriebesteuereinrichtung im Sinne des Herstellens einer kraftschlüssigen Verbindung im Getriebe erfolgt. Diese Maßnahme soll sicherstellen, dass ein bewusstes Betätigen des Getriebewählhebels durch den Fahrer vorliegt, bevor ein Erzeugen eines Kraftschlusses im Getriebe erfolgt.

Gemäß einer weiteren Ausgestaltung der Erfindung erfolgt das Herstellen eines Kraftschlusses im Getriebe erst dann, wenn ein Betätigen des Bremspedals über eine vorgegebene Mindestbetätigung hinaus erfolgt, wobei dies insbesondere über den Bremsbetätigungssensor festgestellt wird. Diese Maßnahme stellt sicher, dass durch den Fahrer eine Bremsbetätigung vorgenommen wird, die eine Bremskraft erzeugt, welche ein sicheres Halten des Fahrzeugs im Stillstand auch nach dem Herstellen des Kraftschlusses im Getriebe ermöglicht. Somit wird das Herstellen eines Kraftschlusses im Getriebe bei ungenügender Bremsbetätigung durch den Fahrer vermieden. Dies stellt eine Sicherung gegen überraschendes, unerwartetes Anrollen des Fahrzeugs nach dem Einlegen eines Fahrganges dar.

Es kann sinnvoll sein, dass ein kontinuierliches Durchfahren einer kraftschlussfreien Stellung des Getriebewählhebels beim Übergang zwischen zwei kraftschlüssigen Stellungen nicht als Vorliegen einer kraftschlussfreien Stellung angesehen wird.

Ein automatisches Schaltgetriebe für Fahrzeuge, welches zur Durchführung erfindungsgemäßer Verfahren geeignet ist, weist eine mechanische Verbindung zwischen einem Getriebewählhebel und einem Getriebe auf. Darüber hinaus ist eine Getriebesteuereinrichtung vorgesehen, welche mittels elektrischen Getriebesteuersignalen einen Steller am Getriebe zum Herstellen oder Unterbrechen des Kraftschlusses im Getriebe ansteuert. Dabei weist das Getriebe kraftschlüssige und kraftschlussfreie Stellungen auf, die entsprechenden Schaltstellungen des Getriebewählhebels zugeordnet sind. Außerdem ist ein Bremsbetätigungssensor zum Erfassen der Betätigung des Bremspedals durch den Fahrer vorgesehen. Gemäß der Erfindung ist der Steller unmittelbar am Getriebe angeordnet und wirkt direkt auf das Getriebe ein, wobei der Steller im Ansprechen auf in der Getriebesteuereinrichtung erzeugte Getriebesteuersignale das Herstellen eines Kraftschlusses im Getriebe verhindert, wenn ein Übergang von einer kraftschlussfreien Schaltstellung in eine kraftschlüssige Schaltstellung des Getriebewählhebels erfolgt und wenigstens in einem zeitlichen Zusammenhang zu diesem Übergang des Getriebewählhebels eine Betätigung des Bremspedals nicht vorliegt.

Im Übrigen ist die Erfindung nachfolgend anhand des in der Zeichnung dargestellten Ausführungsbeispiels näher erläutert, dabei zeigt:
- Figur 1: das Flussdiagramm eines erfindungsgemäßen Verfahrens; und
- Figur 2: in schematischer Darstellung das Blockdiagramm eines erfindungsgemäßen automatischen Getriebes.

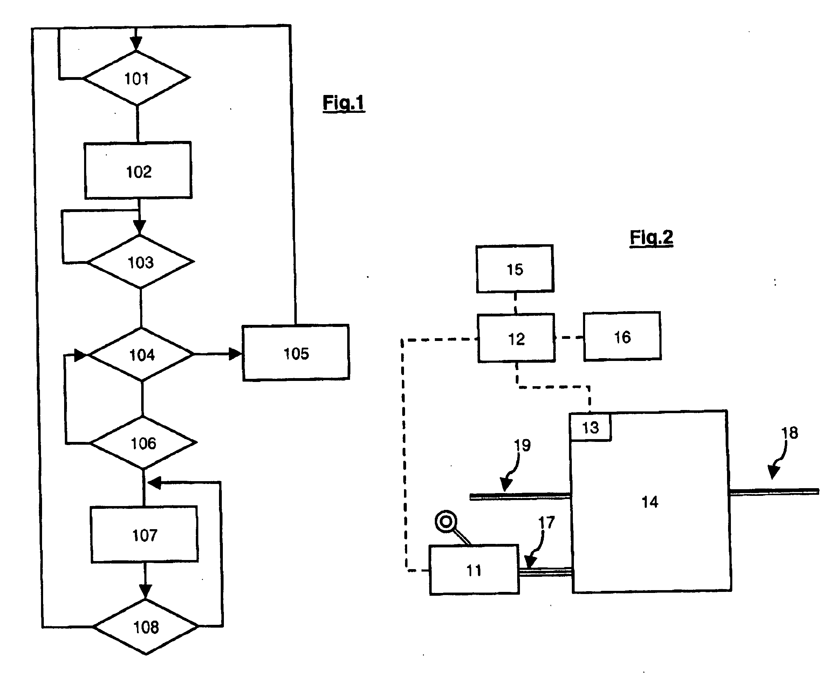

Die Figur 1 zeigt das Flussdiagramm eines erfindungsgemäßen Verfahrens. Gemäß dem Schritt 101 des Verfahrens wird zunächst überprüft, ob der Getriebewählhebel 11 sich in einer Stellung befindet, in der das Getriebe kraftschlussfrei ist, d. h. in dem der Kraftschluss zwischen Abtriebswelle 18 des Motors, also der Vorlegewelle des Getriebes und der vom Getriebe wegführenden Ablege- bzw. Kardanwelle 19 unterbrochen ist. Solange dies nicht der Fall ist, wird eine Wartschleife durchgeführt und wieder zum Schritt 101 gesprungen. Sobald im Schritt 101 festgestellt wird, das der Getriebewählhebel 11 in einer kraftschlussfreien Stellung ist, wird zum Schritt 102 übergegangen.

Gemäß dem Schritt 102 wird in der Getriebesteuereinrichtung 12 ein Signal erzeugt, das den Steller 13 derart ansteuert, dass das Herstellen eines Kraftschlusses im Getriebe 14 verhindert wird, auch wenn sich der Getriebewählhebel 11 in einer kraftschlüssigen Stellung befindet. Anschließend wird zum Schritt 103 des Verfahrens übergegangen und überprüft, ob der Getriebewählhebel in eine kraftschlüssige Stellung verbracht wurde. Solange dies nicht der Fall ist, wird eine Warteschleife durchgeführt und demgemäß wieder zum Schritt 103 zurückgesprungen. Sobald festgestellt wird, dass der Getriebewählhebel in eine kraftschlüssige Stellung verbracht wurde, wird zum Schritt 104 übergegangen. Dort wird abgefragt, ob der Bremsbetätigungssensor 16 ein Signal erzeugt, das einer Betätigung der Bremse durch den Fahrer entspricht. Ist dies der Fall, so wird zum Schritt 105 übergegangen und gemäß diesem Schritt wird in der Getriebesteuereinrichtung 12 ein Signal erzeugt, das den Steller 13 derart ansteuert, dass im Getriebe 14 eine kraftschlüssige Verbindung von Vorlegewelle 18 zu Abtriebswelle 19 hergestellt wird.

Andernfalls wird vom Schritt 104 zum Schritt 106 gesprungen und überprüft, ob ein Zeitintervall seit dem Überführen des Getriebewählhebels aus einer kraftschlussfreien in eine kraftschlüssige Verbindung abgelaufen ist. Ist dieses Zeitintervall nicht beendet, so wird zum Schritt 104 zurückgesprungen. Nach Beendigung des Zeitfensters, und ohne dass eine Betätigung der Bremse in einem der durchgeführten Schritte 104 festgestellt wurde, wird vom Schritt 106 zum Schritt 107 gesprungen. Gemäß dem Schritt 107 wird über eine Anzeigeeinrichtung 15 ein akustisches oder optisches bzw. haptisches Signal an den Fahrer weitergegeben, wonach ein Kraftschluss im Getriebe 14 nicht hergestellt wurde, obgleich sich der Getriebewählhebel 11 in einer Stellung befindet, die einer kraftschlüssigen Verbindung im Getriebe entspricht. Nach dem Erzeugen des Signals gemäß dem Schritt 107 wird in dem Schritt 108 überprüft, ob der Getriebewählhebel 11 wieder in eine Stellung verbracht wurde, die einem kraftschlussfreien Zustand des Getriebes 14 entspricht. Solange dies nicht der Fall ist, wird zum Schritt 107 zurückgesprungen und das Signal weiter an den Fahrer vermittelt. Erst wenn eine kraftschlussfreie Stellung des Getriebewählhebels 11 hergestellt wurde, wird wieder zum Schritt 101 zurückgesprungen.

Die Figur 2 zeigt in schematischer Darstellung ein automatisches Getriebe 14 eines Fahrzeugs, das zur Durchführung der Erfindung geeignet ist. Das automatische Getriebe 14 ist über die mechanische Verbindung 17 mit dem Getriebewählhebel 11 verbunden, welcher fahrerbetätigbar ist. Darüber hinaus ist im Getriebe ein Steller 13 angeordnet, welcher dazu geeignet ist, von einer Getriebesteuereinrichtung 12 angesteuert zu werden und über Durchführung von Stellbefehlen zumindest dazu geeignet ist, entgegen der Wirkung der Betätigung des Getriebewählhebels 11 und der mechanischen Verbindung 17 das Aufrechterhalten eines kraftschlussfreien Zustandes des Getriebes 14 zu ermöglichen.

In einer kraftschlussfreien Stellung des Getriebewählhebels 11 ist das Getriebe 14 so geschaltet, dass der Kraftschluss zwischen der Vorlegewelle 18, welche vom Motor kommt, und der Antriebswelle 19 des Fahrzeugs, beispielsweise einer Kardanwelle, unterbrochen ist. In einer kraftschlüssigen Stellung des Getriebewählhebels 11 ist diese Verbindung zwischen der Vorlegewelle 18 und der Antriebswelle 19 in einem durch das Getriebe bestimmten Übersetzungsverhältnis hergestellt.

Der Steller 13 wird von der Getriebesteuereinrichtung 12 angesteuert. Die Getriebesteuereinrichtung 12 erhält zum einen von dem Getriebewählhebel 11 Signale, die die Stellung des Getriebewählhebels repräsentieren, zum anderen werden ihr die Signale eines Bremsbetätigungssensors 16 zugeführt, womit zumindest die Tatsache der Betätigung, insbesondere aber auch die Intensität der Bremspedalbetätigung, erfasst werden kann. Neben dem Steller 13 steuert die Getriebesteuereinrichtung 12 auch eine Anzeigevorrichtung 15 an, die geeignet ist, dem Fahrer optische, akustische oder haptische Signale zu vermitteln.

## Patentansprüche

1. Verfahren zum Ansteuern eines automatischen Schaltgetriebes für Fahrzeuge, wobei ein mechanisch mit dem Getriebe verbundener Getriebewählhebel (11) vorgesehen ist, welcher fahrerbetätigbar zwischen Schaltstellungen verbringbar ist, wobei kraftschlüssige Schaltstellungen und kraftschlussfreie Schaltstellungen existieren, und in einer Getriebesteuereinrichtung (12) mittels eines Bremsbetätigungssensors (16) die Betätigung des Bremspedals erfasst wird und ein elektrisches Getriebesteuersignal erzeugt wird, welches das Herstellen oder Unterbrechen des Kraftschlusses im Getriebe (14) durch einen Steller (13) steuert,
**dadurch gekennzeichnet, dass**,
wenn in einem zeitlichen Zusammenhang zum Verbringen des Getriebewählhebels (11) aus einer kraftschlussfreien Stellung in eine kraftschlüssige Stellung mittels des Bremspedalsensors (16) erkannt wird, dass das Bremspedal nicht betätigt ist, in der Getriebesteuereinrichtung (12) Getriebesteuersignale erzeugt werden, die den Steller (13) derart ansteuern, dass das Herstellen eines Kraftschlusses im Getriebe (14) verhindert wird, wobei der Steller (13) unmittelbar am Getriebe (14) angeordnet ist und direkt auf das Getriebe (14) einwirkt.

2. Verfahren nach Anspruch 2, **dadurch gekennzeichnet, dass** dann, wenn das Herstellen eines Kraftschlusses im Getriebe (14) durch Ansteuern des Stellers (13) verhindert wird, wenigstens eine für den Fahrer wahrnehmbare Rückmeldung erzeugt wird.

3. Verfahren nach Anspruch 2, **dadurch gekennzeichnet, dass** die wenigstens eine für den Fahrer wahrnehmbare Rückmeldung wenigstens eines aus der Menge der haptischen, akustischen oder optischen Rückmeldungen ist.

4. Verfahren nach Anspruch 3, **dadurch gekennzeichnet, dass** es sich bei der haptischen Rückmeldung um wenigstens eines aus erhöhtem Betätigungswiderstand oder sofortiger Rückstellung des Getriebewählhebels (11) in die kraftschlussfreie Schaltstellung handelt.

5. Verfahren nach einem der vorangegangenen Ansprüche, **dadurch gekennzeichnet, dass** die Betätigung des Bremspedals spätestens innerhalb eines vorgegebenen Zeitintervalls nach dem Verbringen des Getriebewählhebels (11) aus einer kraftschlussfreien Stellung in eine kraftschlüssige Stellung, insbesondere während des Verbringens des Getriebewählhebels (11) vorliegen muss, damit ein Ansteuern des Stellers (13) durch die Getriebesteuereinrichtung (12) im Sinne eines Verhinderns des Herstellens eines Kraftschlusses im Getriebe (14) unterbleibt.

6. Verfahren nach einem der vorangegangenen Ansprüche, **dadurch gekennzeichnet, dass** nach einem Verbringen des Getriebewählhebels (11) aus einer kraftschlussfreien Stellung in eine krafschlüssige Stellung, welches zu einem Verhindern des Herstellens eines Kraftschlusses im Getriebe (14) geführt hat, ein Ansteuern des Stellers (13) durch die Getriebesteuereinrichtung (12) im Sinne des Herstellens eines Kraftschlusses erst erfolgt, wenn der Getriebewählhebel (11) zuvor wieder in eine kraftschlussfreie Stellung verbracht wurde.

7. Verfahren nach einem der Ansprüche 1 bis 5, **dadurch gekennzeichnet, dass** das Herstellen eines Kraftschlusses im Getriebe (14) dann erfolgt, wenn über den Bremsbetätigungssensor (16) die Betätigung des Bremspedals über eine vorgegebene Mindestbetätigung hinaus erfolgt.

8. Automatisches Schaltgetriebe für Fahrzeuge, mit einer mechanischen Verbindung zwischen Getriebewählhebel (11) und Getriebe (14), sowie einer Getriebesteuereinrichtung (12), welche elektrische Getriebesteuersignale erzeugt, mittels derer ein Steller (13) zum Herstellen oder Unterbrechen des Kraftschlusses im Getriebe (14) ansteuerbar ist, wobei der Getriebewählhebel (11) fahrerbetätigbar in Schaltstellungen verbringbar ist, wobei kraftschlüssige Schaltstellungen und kraftschlussfreie Schaltstellungen des Getriebes (14) existieren, sowie mittels eines Bremsbetätigungssensors (16) die Betätigung des Bremspedals erfasst wird,
**dadurch gekennzeichnet, dass**
der Steller (13) unmittelbar am Getriebe (14) angeordnet ist und direkt auf das Getriebe (14) einwirkt, wobei der Steller (13) im Ansprechen auf in der Getriebesteuereinrichtung (12) erzeugte Getriebesteuersignale das Herstellen eines Kraftschlusses im Getriebe (14) verhindert, wenn ein Übergang des Getriebewählhebels (11) von einer kraftschlussfreien Schaltstellung in eine kraftschlüssige Schaltstellung erfolgt und wenigstens in zeitlichem Zusammenhang des Übergangs des Getriebewählhebels (11) eine Betätigung des Bremspedals nicht vorliegt.

## Claims

1. Method for controlling an automatic transmission for vehicles wherein there is provided a gear selector lever (11) which is mechanically connected with the transmission and which can be transposed between selector positions by operation by the driver, wherein there are power engagement selector positions and power disengagement selector positions, and wherein operation of the brake pedal is captured in a transmission control device (12) by means of a brake operating sensor (16) and an electric transmission control signal is produced which controls by way of an actuator (13) the establishment or interruption of power engagement in the transmission (14),
**characterised in that**, if, by means of the brake pedal sensor (16), it is detected in a time related context for transposing the gear selector lever (11) from a power disengagement position into a power engagement position, that the brake pedal is not being operated, then transmission control signals are produced in the transmission control device (12) which control the actuator (13) in such a way that establishment of power engagement in the transmission (14) is prevented, the actuator (13) being arranged directly at the transmission (14) and acting directly on the transmission (14).

2. Method according to claim 2, **characterised in that** when establishment of power engagement in the transmission (14) is prevented by control of the actuator (13), there is produced at least one feed back communication perceivable by the driver.

3. Method according to claim 2, **characterised in that** the at least one feed back communication perceivable by the driver is at least one from the selection that comprises tactile, audible or visual feed back communications.

4. Method according to claim 3, **characterised in that**, in the case of tactile feed back communication, it concerns at least one of the following, namely raised operating resistance or immediate return movement of the gear selector lever (11) into the power disengagement selector position.

5. Method according to one of the preceding claims, **characterised in that** operation of the brake pedal must have taken place at the latest within a predetermined time interval after transposing of the gear selector lever (11) from a power disengagement position into a power engagement position, especially during transposing of the gear selector lever (11), in order that control of the actuator (13) by the transmission control device (12) in the sense of preventing establishment of power engagement in the transmission (14) does not happen.

6. Method according to one of the preceding claims, **characterised in that** after transposing the gear selector lever (11) from a power disengagement position into a power engagement position, which has brought about prevention of establishment of power engagement in the transmission (14), control of the actuator (13) by the transmission control device (12) in the sense of establishment of power engagement, only happens if the gear selector lever (11) has previously again been transposed into a power disengagement position.

7. Method according to one of claims 1 to 5, **characterised in that** establishment of power engagement in the transmission (14) takes place if, by way of the brake operating sensor (16), operation of the brake pedal has exceeded a predetermined minimum operation.

8. Automatic transmission for vehicles having a mechanical connection between gear selector lever (11) and transmission (14), and also a transmission control device (12) which produces electric transmission control signals by means of which an actuator (13) can be controlled for establishing or interrupting power engagement in the transmission (14), the gear selector lever (11) being transposable into selector positions by driver operation, there being power engagement selector positions and power disengagement positions of the transmission (14), and also operation of a brake pedal being captured by means of a brake operating sensor (16), **characterised in that** the actuator (13) is arranged directly at the transmission (14) and acts directly on the transmission (14), the actuator (13) when responding to transmission control signals produced in the transmission control device (12) prevents establishment of power engagement in the transmission (14) if transition of the gear selector lever (11) from a power disengagement selector position into a power engagement selector position takes place and operation of the brake pedal has not taken place within at least a time related context of the transition of the gear selection lever (11).

## Revendications

1. Procédé de commande d'une boîte de vitesses automatique pour véhicules automobiles, un levier de vitesses (11) relié mécaniquement à la boîte étant prévu, lequel peut être amené de manière actionnable par le conducteur entre des positions de commutation, des positions de commutation à force et des positions de commutation sans force existant, et dans un dispositif de commande de boîte (12) étant détecté l'actionnement de la pédale de frein au moyen d'un capteur d'actionnement de frein (16) et un signal de commande de boîte électrique étant généré, lequel commande l'établissement ou l'interruption de la liaison à force dans la boîte (14) par un organe de commande (13),
**caractérisé en ce que**
s'il est détecté dans un rapport temporel destiné à amener le levier de vitesses (11) d'une position sans force à une position à force au moyen du capteur de pédale de frein (16), que la pédale de frein n'est pas actionnée, des signaux de commande de boîte sont générés dans le dispositif de commande de boîte (12), lesquels commandent l'organe de commande (13) de telle sorte que l'établissement d'une liaison à force dans la boîte (14) est évité, l'organe de commande (13) étant directement disposé sur la boîte (14) et agissant directement sur la boîte (14).

2. Procédé selon la revendication 2, **caractérisé en ce que** si l'établissement d'une liaison à force dans la boîte (14) est empêché par la commande de l'organe de commande (13), au moins un rétrosignal perceptible pour le conducteur est généré.

3. Procédé selon la revendication 2, **caractérisé en ce que** l'au moins un rétrosignal perceptible pour le conducteur est au moins un rétrosignal faisant partie de l'ensemble des rétrosignaux haptiques, acoustiques ou optiques.

4. Procédé selon la revendication 3, **caractérisé en ce qu'**il s'agit pour le rétrosignal haptique d'au moins un rétrosignal de la résistance d'actionnement augmentée ou de la remise à l'état initial immédiate du levier de vitesses (11) dans la position de commutation sans force.

5. Procédé selon l'une quelconque des revendications précédentes, **caractérisé en ce que** l'actionnement de la pédale de frein doit se présenter au plus tard dans un intervalle de temps prescrit après avoir amené le levier de vitesses (11) d'une position sans force à une position à force, en particulier pendant le déplacement du levier de vitesse (11), afin que l'organe de commande (13) ne soit pas commandé par le dispositif de commande de boîte (12) au sens d'un empêchement de l'établissement d'une liaison à force dans la boîte (14).

6. Procédé selon l'une quelconque des revendications précédentes, **caractérisé en ce qu'**après un déplacement du levier de vitesses (11) d'une position sans force à une position à force, lequel a entraîné un empêchement de l'établissement d'une liaison à force dans la boîte (14), l'organe de commande (13) n'est commandé par le dispositif de commande de boîte (12) au sens de l'établissement d'une liaison à force que si le levier de vitesses (11) a été amené auparavant de nouveau dans une position sans force.

7. Procédé selon l'une quelconque des revendications 1 à 5, **caractérisé en ce qu'**une liaison à force dans la boîte (14) n'est établie que si la pédale de frein est actionnée par le capteur d'actionnement de frein (16) au-delà d'un actionnement minimal prescrit.

8. Boîte de vitesses automatique pour véhicules automobiles, avec une liaison mécanique entre le levier de vitesses (11) et la boîte (14), ainsi qu'un dispositif de commande de boîte (12) qui génère des signaux de commande de boîte électriques, au moyen desquels un organe de commande (13) peut être commandé pour l'établissement ou l'interruption de la liaison à force dans la boîte (14), le levier de vitesses (11) pouvant être amené de manière actionnable par le conducteur dans des positions de commutation, des positions de commutation à force et des positions de commutation sans force de la boîte (14) existant, ainsi qu'au moyen d'un capteur d'actionnement de frein (16) étant détecté l'actionnement de la pédale de frein,
**caractérisée en ce que**
l'organe de commande (13) est directement disposé sur la boîte (14) et agit directement sur la boîte (14), l'organe de commande (13) empêchant en réponse aux signaux de commande de boîte générés dans le dispositif de commande de boîte (12) l'établissement d'une liaison à force dans la boîte (14) si un passage du levier de vitesses (11) d'une position de commutation sans force à une position de commutation à force est effectué et au moins dans un rapport temporel du passage du levier de vitesses (11), un actionnement de la pédale de frein ne se présente pas.
